# EUROPÄISCHE PATENTSCHRIFT

(11) **EP 2 780 734 B1**
(45) Veröffentlichungstag und Bekanntmachung des Hinweises auf die Patenterteilung: **30.12.2015**
(21) Anmeldenummer: 12772288.2
(22) Anmeldetag: 04.10.2012
(51) Int. Cl.: G01S 7/52, G01S 15/10, G01S 15/93

(54) **VERFAHREN ZUM BETREIBEN EINES SENSORS**
METHOD FOR THE OPERATION OF A SENSOR
PROCÉDÉ SERVANT À FAIRE FONCTIONNER UN CAPTEUR

(30) Priorität: 14.11.2011 DE 102011086244
(43) Veröffentlichungstag der Anmeldung: 24.09.2014
(73) Patentinhaber: Robert Bosch GmbH, 70442 Stuttgart (DE)
(72) Erfinder: HELMLE, Michael, 73732 Esslingen (DE)
(86) Internationale Anmeldenummer: PCT/EP2012/069579
(87) Internationale Veröffentlichungsnummer: WO 2013/072133

(56) Entgegenhaltungen:
- EP-A1- 2 056 235
- WO-A1-2005/062072
- DE-A1- 19 645 339
- US-A1- 2003 065 432

## Beschreibung

### Stand der Technik

Die Erfindung betrifft ein Verfahren zum Betreiben eines Sensors zur Umfelderkennung in einem Fahrassistenzsystem. Die Erfindung betrifft zudem einen Sensor als Teil eines Fahrassistenzsystems in einem Fahrzeug.

Fahrassistenzsysteme sind Zusatzeinrichtungen in einem Fahrzeug, die den Fahrer beim Führen des Fahrzeuges unterstützen. Derartige Fahrassistenzsysteme umfassen typischerweise unterschiedliche Subsysteme, wie Fahrerinformationssysteme oder prädiktive Sicherheitssysteme. Für verschiedene dieser Subsysteme ist eine Sensorik erforderlich, die das Umfeld des Fahrzeuges überwacht, um beispielsweise Objekte zu detektieren, die potentielle Hindernisse auf der Fahrbahn darstellen können. In diesem Zusammenhang können unterschiedliche Sensoren, wie Ultraschallsensoren, Radarsensoren oder optische Sensoren, einzeln oder in Kombination eingesetzt werden.

Typische Umfeldsensorik umfasst beispielsweise Abstandssensoren, die den Abstand zu Objekten im Umfeld des Fahrzeuges basierend auf einem Puls-Echoverfahren messen. Dabei wird innerhalb eines Messzyklus ein Sendesignal ausgesendet und von einem Objekt reflektiert. Das Echosignal gelangt in eine Detektionseinrichtung, wo aus dem zeitlichen Abstand zwischen dem Senden des Sendesignals und dem Empfang des Echosignals der Abstand zum Objekt bestimmt wird. Diese Messungen führen zu Daten, die als Grundlage zur Einparkunterstützung, zur Totwinkelüberwachung und/oder zur Spurüberwachung dienen.

Um aus der Laufzeit der Signale einen eindeutigen Abstand ableiten zu können, arbeiten solche Abstandssensoren in einem Eindeutigkeitsbereich. Das bedeutet, dass sich die Länge der Messzyklen nach der maximal zu erwartenden Laufzeit des Sendepulses bestimmt. Um beispielsweise eine Messweite von 5 m zu realisieren, ist bei einer Schallgeschwindigkeit von 343 m/s ein Messzyklus von etwa 30 ms einzuhalten. Derartige Messdaten sind zusätzlich mit einem Rauschen überlagert. So werden zur Korrektur der Messungen Schwellwertkennlinien vorgegeben, die oberhalb zu erwartenden des Rauschlevels liegen. Aus DE 19645339 A1 ist beispielsweise ein Verfahren zur Abstandsmessung bekannt, bei dem eine statische Schwellwertkennlinie durch eine Anzahl von Schwellenwert-Stützschwellen definiert wird. Bei der Messung wird die Amplitude des empfangenen Signals mittels eines Komparators mit dem Schwellwert verglichen. Erst wenn die Amplitude den Schwellwert übersteigt, meldet der Sensor das Empfangssignal an eine Auswerteeinheit.

Um große Abstände einbeziehen zu können, wird daher eine möglichst an den Rauschlevel angepasste Schwellwertkennlinie vorgegeben und die Sendeleistung entsprechend der äußeren Umstände eingestellt. Zudem ist zu beachten, dass für die Höhe des Rauschlevels das dynamische Umfeld, in dem die Sensoren arbeiten, eine Rolle spielt. So hängen die Amplituden der reflektierten Echos insbesondere von der Lufttemperatur, dem Luftdruck und der Feuchtigkeit ab. Auch werden die Sensoren beispielsweise bei Regen durch Gischt oder Nebel und durch Rollgeräusche sowie Luftströmungen bei höheren Geschwindigkeiten gestört. Diese Störungen können nicht existierende aber vom Sensor wahrgenommene "Geisterobjekte" erzeugen, die als Objekte erkannt werden und zum Fehlverhalten des Systems führen. Weiter kann durch die beschriebenen Umwelteinflüsse umgekehrt auch das Erkennen eines vorhandenen Objekts erschwert oder sogar verhindert werden. Um diese Art von Störungen auszublenden muss eine dynamische Anpassung der Sensorparameter an die jeweilige Rauschsituation vorgenommen werden.

Aus WO 2005/062072 A1 ist ein Verfahren zum Betreiben eines Radarsensors bekannt, der Teil eines Fahrassistenzsystems eines Fahrzeugs ist. Der Radarsensor ist mit einer Sende- und einer Empfangseinrichtung versehen, wobei deren jeweilige Sende- und Empfangsparameter veränderbar sind. Die Veränderung der Sende- und Empfangsparameter erfolgt in Abhängigkeit von einer Eigengeschwindigkeit des Fahrzeugs, von einem detektierten Zielszenario, oder durch eine vom Fahrer aktivierte Fahrassistenzfunktion.

### Offenbarung der Erfindung

Erfindungsgemäß wird ein Verfahren zum Betreiben eines Sensors zur Umfelderkennung in einem Fahrassistenzsystem eines Fahrzeuges vorgeschlagen, das folgende Schritte umfasst:
a) Bereitstellen einer Umfeldkarte umfassend erinnerungsbasierte Messdaten;
b) Erfassen von aktuellen Messdaten des Sensors basierend auf dem aktuellen Umfeld;
c) Generieren eines Steuersignals basierend auf den aktuellen Messdaten und den entsprechenden erinnerungsbasierten Messdaten;
d) Anpassen mindestens eines Parameters des Sensors basierend auf dem generierten Steuersignal.

Der Sensor kann Teil der Umfeldsensorik eines Fahrassistenzsystems mit unterschiedlichen Subsystemen, etwa einem Einparkassistenten, einer Totwinkelüberwachung oder einem Adaptive-Cruise-Control (ACC) System, sein. Dabei dient die Umfeldsensorik des Fahrassistenzsystems zur Überwachung des Fahrzeugumfeldes, wobei Ultraschallsensoren, Radarsensoren, Infrarotsensoren, LIDAR-Sensoren oder optische Sensoren eingesetzt werden können. Insbesondere kann der Sensor zur Abstandsmessung in einem Fahrassistenzsystems eingesetzt werden. So können zur Abstandsmessung insbesondere Ultraschallsensoren Anwendung finden, die nach dem Prinzip eines Signal-Echo-Verfahrens den Abstand zu Objekten im Umfeld des Fahrzeuges bestimmen.

In einer Implementierung des Verfahrens können die erinnerungsbasierten Messdaten erkannte Objekte oder Merkmale im Fahrzeugumfeld kennzeichnen. Derartige Objekte oder Merkmale können anhand von Messdaten des zu betreibenden Sensors selbst und/oder von Messdaten anderer vorzugsweise am Fahrzeug verbauten Sensoren charakterisiert werden. Im Falle eines zu betreibenden Ultraschallsensors können die erinnerungsbasierten Messdaten beispielsweise zeitlich vorher aufgenommene Messdaten von Radarsensoren, LIDAR-Sensoren oder optische Sensoren, wie Kameras, umfassen.

Die Umfeldkarte kann insbesondere eine digitale Karte darstellen, die eine Datenbank von gespeicherten Messdaten bereitstellt. Diese Daten können lokal auf einem maschinenlesbaren Speichermedium gespeichert werden, etwa auf einem permanenten oder wiederbeschreibbaren Speichermedium. Zusätzlich oder alternativ können die erninnerungsbasierten Messdaten auf einer Einrichtung wie einem Server zum Herunterladen bereitgestellt werden, zum Beispiel über ein Datennetzwerk, wie das Internet oder eine Kommunikationsverbindung, wie etwa eine Telefonleitung oder eine Drahtlosverbindung.

Die erinnerungsbasierten Messdaten des Sensors können in der Umfeldkarte weiterhin mit Referenzdaten verknüpft sein. Die Referenzdaten können etwa die Position von erkannten Objekten oder Merkmalen des Umfeldes umfassen, die beispielsweise bei der Erfassung von aktuellen Messdaten mittels eines Positionierungssystems, wie einem GPS-Sensor, bestimmt wird. Alternativ oder zusätzlich können weitere Sensoren der Umfeldsensorik des Fahrassistenzsystems Daten bereitstellen, die es erlauben, die erinnerungsbasierten Messdaten des Sensors bestimmten Objekten oder Merkmalen des Umfeldes zuzuordnen. So können die erinnerungsbasierten Messdaten, beispielsweise eines Ultraschallsensors, mit denen eines optischen Sensors, beispielsweise einer Kamera, verknüpft werden. Dabei werden Objekte, die beispielsweise von Ultraschallsensoren und Kameras gemeinsam in einem sich überdeckenden Messfeld erkannt wurden, miteinander verglichen und zugeordnet. Die gemeinsame Detektion kann auch zeitlich versetzt erfolgen, das heißt zum Zeitpunkt t1 wird das Objekt von einem Ultraschallsensor am Fahrzeug gemessen und zu einem späteren Zeitpunkt t2 von einer Kamera am Fahrzeug. Eine wichtige Rolle spielen dabei unveränderliche Objekte in der Umfeldkarte, die bei einem erneuten Vermessen des Umfeldes am bekannten Ort sicher wiedergefunden werden können. Dies können beispielsweise Gebäude, Brücken, Garageneinfahrten, Verkehrsinseln oder andere ausgedehnte Objekte sein. Durch derartige Referenzdaten lassen sich gemessene Objekte eindeutig zuordnen und gegebenenfalls klassifizieren.

In einer weiteren Implementierung des erfindungsgemäßen Verfahrens kann die Umfeldkarte stetig aktualisiert werden, indem aktuelle Messdaten in die Umfeldkarte aufgenommen werden. Dabei werden aktuelle Messdaten erinnerungsbasierten Messdaten bereits erkannter Objekte oder Merkmale zugeordnet. Auch aktuelle Messdaten, die keinem schon erkannten Objekt oder Merkmal entsprechen, können als zusätzliche Daten in der Umfeldkarte gespeichert werden. Zusätzlich oder alternativ können die gespeicherten Messdaten die Auswahl von erkannten Objekten steuern, die dem Generieren eines Steuersignals dienen. Beispielsweise kann dabei die Qualität der erinnerungsbasierten Messdaten für das jeweilige Objekt entscheidend sein, wobei sich die Qualität etwa nach der Statistik richtet, in der die erinnerungsbasierten Messdaten vorhanden sind.

Weiterhin können aktuelle Messdaten mit anderen, in unterschiedlichen Positionen an einem Fahrzeug verbauten Sensoren verglichen werden. Auf diese Weise kann eine Plausibilitätskontrolle zwischen den unterschiedlichen Sensoren durchgeführt werden, die beispielsweise auf defekte Sensoren hinweisen kann.

Aus den aktuellen Messdaten des Sensors und den erinnerungsbasierten Messdaten des Sensors kann die Messgüte des Sensors zum Zeitpunkt der Messung bestimmt werden. Dazu können die aktuellen Messdaten mit den erinnerungsbasierten Messdaten der Umfeldkarte verglichen werden. Ergibt ein solcher Vergleich beispielsweise, dass die aktuellen Messdaten in Bezug auf ein bereits erkanntes Objekt oder Merkmal im Umfeld eine kleinere Amplitude und/oder ein größeres Rauschlevel aufweisen, so ergibt sich eine Messgüte, die im Vergleich zu vorherigen Messungen schlechter ist. Umgekehrt kann der Vergleich zwischen den aktuellen Messdaten mit den erinnerungsbasierten Messdaten der Umfeldkarte auch eine verbesserte Messgüte indizieren, wenn beispielsweise die Amplitude höher oder das Rauschlevel niedriger sind. Die über die Umfeldkarte bekannten Objekte ermöglichen beim erneuten Vermessen, eine Beurteilung der aktuellen Sensorgüte und können in einem weiteren Schritt herangezogen werden, um die Sensorempfindlichkeit so zu steuern, dass ein bekanntes Objekt mit einer vorgegebenen Signalgröße oder einem vorgegebenem Signal-Rauschverhältnis erkannt wird. Des Weiteren kann diese Auswertung zur Beurteilung der aktuellen Messgüte herangezogen werden.

Basierend auf den aktuellen Messdaten und den entsprechenden erinnerungsbasierten Messdaten wird ein Steuersignal generiert, wobei die aktuellen und die erinnerungsbasierten Messdaten anhand von erkannten Objekten oder Merkmalen in der Umfeldkarte miteinander verglichen werden. Dieser Vergleich kann beispielsweise in einem Steuergerät mit Komparator erfolgen, wobei das generierte Steuersignal dann an den Sensor kommuniziert wird und dort die Anpassung mindestens eines Parameters des Sensors bewirkt. Dies kann beispielsweise bei Ultraschallsignalen die Komparatorschwelle sein, die festlegt, ab welcher Schallintensität ein Erkennen eines Objekts angenommen wird. So kann die Detektionsschwelle angepasst werden, um ein frühere erkanntes Objekt wieder zu registrieren, insbesondere durch Absenken der Detektionsschwelle.

Der anpassbare Parameter des Sensors kann mindestens ein Schwellenwert und/oder eine Sendeleistung des Sensors sein. Dabei kann der Schwellenwert eine Kennlinie im Empfangskanal bestimmen, die zwischen echten Signalen und Rauschsignalen diskriminiert. Die Sendeleistung des Sensors kann beispielsweise bei einem Ultraschallsensor durch die angelegte Spannung, welche das Anregen einer Ultraschallwelle initiiert, eingestellt werden. Weitere Möglichkeiten, den Sensor an die jeweiligen Umgebungsbedingungen anzupassen, umfassen die Steuerung der Pulslänge, die Anpassung der Messzykluszeit oder die Umschaltung der Empfangsstärke.

Durch die Anpassung eines Parameters des Sensors basierend auf dem generierten Steuersignal kann die Messcharakteristik des Sensors an die Umgebungsbedingungen angepasst werden. Beispielsweise können Schmutz, Schnee, Regen oder sonstige Wetterbedingungen die Sensorcharakteristik erheblich beeinflussen. Insbesondere bei einem Ultraschallsensor kann die Luftfeuchtigkeit, der Luftdruck oder die Temperatur die Messgüte des Sensors erheblich beeinflussen. So kann beim Vorliegen einer erhöhten Luftfeuchtigkeit, die in einer erhöhten Absorption resultiert, die Sendeleistung des Ultraschallsensors erhöht werden. Zusätzlich oder alternativ kann auch der Schwellenwert im Ausgangskanal abgesenkt werden und damit die Empfangsempfindlichkeit erhöht werden.

Zudem wird erfindungsgemäß ein Sensor zur Umfelderkennung in einem Fahrassistenzsystem eines Fahrzeuges vorgeschlagen, der gemäß dem vorstehend beschriebenen Verfahren betrieben wird.

Erfindungsgemäß wird weiterhin ein Computerprogramm zur Durchführung eines der hierin beschriebenen Verfahren vorgeschlagen, wenn das Computerprogramm auf einer programmierbaren Computereinrichtung ausgeführt wird. Bei der Computereinrichtung kann es sich beispielsweise um ein ECU zur Implementierung eines Fahrassistenzsystems oder eines Subsystems hiervon in einem Fahrzeug handeln. Das Computerprogramm kann auf einem maschinenlesbaren Speichermedium gespeichert werden, etwa auf einem permanenten oder wiederbeschreibbaren Speichermedium oder in Zuordnung zu einer Computereinrichtung, oder auf einer entfernbaren CD-Rom, DVD oder einem USB-Stick. Zusätzlich oder alternativ kann das Computerprogramm auf einer Computereinrichtung wie einem Server zum Herunterladen bereitgestellt werden, zum Beispiel über ein Datennetzwerk, wie das Internet oder eine Kommunikationsverbindung, wie etwa eine Telefonleitung oder eine Drahtlosverbindung.

Erfindungsgemäß wird weiterhin ein Fahrassistenzsystem umfassend einen Sensor zur Umfelderkennung in einem Fahrzeug vorgeschlagen, das zusätzlich folgende Komponenten enthält:
i) mindestens eine Komponente zum Bereitstellen einer Umfeldkarte mit erinnerungsbasierten Messdaten;
ii) mindestens eine Komponente zum Bereitstellen von aktuellen Messdaten des Sensors basierend auf dem aktuellen Umfeld des Systems;
iii) mindestens eine Komponente zum Generieren eines Steuersignals basierend auf den aktuellen Messdaten und den entsprechenden erinnerungsbasierten Messdaten;
iv) mindestens eine Komponente zum Anpassen mindestens eines Parameters des Sensors basierend auf dem generierten Steuersignal.

Das erfindungsgemäße Fahrassistenzsystem ist vorzugsweise zur Durchführung des vorstehend beschriebenen Verfahrens ausgebildet. Dabei stellen die einzelnen Komponenten funktionale Komponenten oder Routinen dar, die beispielsweise im Rahmen eines Computerprogramms auf einer programmierbaren Computereinrichtung ausgeführt werden. Dabei kann die programmierbare Computereinrichtung ein Steuergerät (ECU) des Fahrassistenzsystems darstellen.

Der Sensor des Fahrassistenzsystems kann beispielsweise als Ultraschallsensor, Radarsensor, Infrarotsensor, LIDAR-Sensor oder anderer optischer Sensor ausgestaltet sein, der aktuelle Messdaten basierend auf dem aktuellen Umfeld erfasst.

Die gespeicherte Umfeldkarte und die erfassten Messdaten können einem Steuergerät (ECU) bereitgestellt werden, das durch einen Komparator ein Steuersignal generiert und mit dem Sensor kommuniziert. Das Steuersignal kann folglich an den Sensor gesendet werden, wobei das Steuersignal mindestens einen Parameter des Sensors anpasst. Insbesondere kann das Steuersignal im Falle eines Abstandssensors, wie einem Ultraschallsensor, eine Anpassung mindestens eines Schwellenwerts und/oder der Sendeleistung des Sensors veranlassen. Dabei bestimmt der mindestens eine Schwellenwert das Empfangsverhalten und die Sendeleistung das Sendeverhalten des Sensors.

### Vorteile der Erfindung

Die Erfindung ermöglicht es, einen Sensor in Abhängigkeit von den aktuellen Umgebungsbedingungen zu betreiben. Dadurch kann die Messcharakteristik des Sensors unmittelbar angepasst werden, und es können qualitativ hochwertige Daten zur Verfügung gestellt werden. Auch kann die Genauigkeit und die Zuverlässigkeit von Messdaten des Sensors erhöht werden. Weiterhin lässt sich die aktuelle Messgüte des Sensors durch Beurteilung der Größe des Messsignals für ein über die gespeicherte Umfeldkarte klassifizierbares, nichtveränderliches Objekt beurteilen. Diese Eigenschaft kann auch zu einer Beurteilung einer möglichen Blindheitserkennung herangezogen werden. Auch eine Sensordegradation über die Lebensdauer kann erfasst und beurteilt werden.

Insbesondere durch die stetige Aktualisierung der Umfeldkarte mit aktuellen Messdaten kann eine statistische Erhebung von Messdaten aufgebaut werden, die es erlaubt, die Messgüte des Sensors auf Dauer zu überwachen und dynamisch anzupassen. Zusätzlich werden falsche Zuordnungen in der Umfeldkarte bei unveränderter Umgebung vermieden. So können speziell im Fall von Abstandsmessungen beispielsweise mit Ultraschallsensoren, Objekte zuverlässig detektiert werden und basierend auf dieser Messung eine Reaktion des Fahrassistenzsystems initiiert werden. Auf diese Weise kann der Nutzwert und die Akzeptanz von entsprechenden Fahrassistenzsystemen erhöht werden. Zusätzlich ermöglichen erinnerungsbasierte Messdaten unterschiedlicher am Fahrzeug verbauter Sensoren eine Plausibilitätskontrolle, die defekte Sensoren identifizieren kann.

Situationen, bei denen die Sensorik eines Fahrassistenzsystems die relevanten Daten zur Unterstützung des Fahrers bereitstellt, treten häufig auf und ein erfindungsgemäßes Fahrassistenzsystem kann somit zu einer verbesserten Unterstützung für den Fahrer beitragen. Zudem kann die dynamische Anpassung der Sensorparameter, ohne zusätzliche Hardwarekomponenten zu benötigen, durch ein Softwareupdate implementiert werden, was eine kostengünstige und einfache Realisierung ermöglicht.

### Ausführungsformen

Weitere Aspekte und Vorteile der Erfindung werden nunmehr anhand der beigefügten Zeichnungen eingehender beschrieben. Hierbei zeigen:
- Figur 1: ein mit einem erfindungsgemäßen Fahrassistenzsystem ausgerüstetes Fahrzeug in einer beispielhaften Fahrsituation,
- Figur 2: das Fahrzeug gemäß Figur 1 in einer Fahrsituation mit veränderten Umgebungsbedingungen,
- Figur 3: schematisch einen Signalverlauf für einen kompletten Messzyklus zur Abstandsmessung,
- Figur 4: in Form eines Flussdiagramms eine Arbeitsweise des Fahrassistenzsystems aus Figuren 1 und 2.

### Ausführungsformen der Erfindung

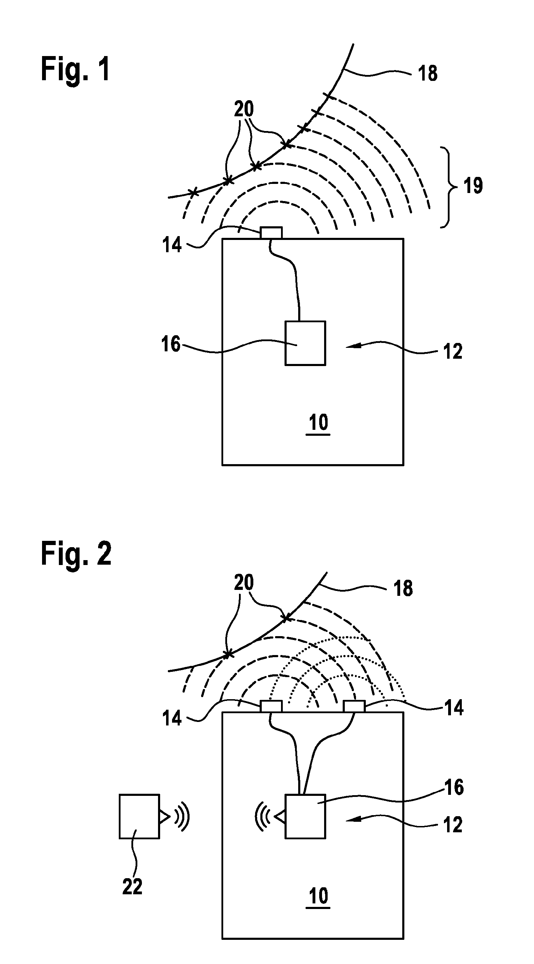

In Figur 1 ist schematisch ein Fahrzeug 10 in einer Fahrsituation dargestellt, in der sich vor dem Fahrzeug 10 ein Hindernis 18, beispielsweise eine Wand befindet. Beim Manövrieren um das Hindernis 18 wird der Fahrer vom erfindungsgemäßen Fahrassistenzsystem 12 unterstützt, indem Abstandsinformationen an den Fahrer weitergeleitet werden. Dazu umfasst das erfindungsgemäße Fahrassistenzsystem 12 einen Ultraschallsensor 14, der Ultraschallwellen aussendet und anhand eines Signal-Echo Verfahrens den Abstand zwischen dem Fahrzeug 10 und dem Hindernis 18 bestimmt. Neben dem Ultraschallsensor 14 kann das erfindungsgemäße Fahrassistenzsystem 12 weitere Sensorik umfassen, die in Figur 1 nicht gezeigt ist. Aus den vom Ultraschallsensor 14 bestimmten Abstandsdaten generiert das Fahrassistenzsystem 12 in der ECU 16 Informationen zur Ausgabe an den Fahrer. Diese Informationen können beispielsweise in akustischer, haptischer oder optischer Form auf einer Mensch-Maschine-Schnittstelle (HMI) des Fahrassistenzsystems 12 ausgegeben werden.

Zum Betreiben des Ultraschallsensors 14 empfängt dieser von dem ECU 16 des Fahrassistenzsystems einen digitalen Sendeimpuls oder ein Sendekommando. Dadurch wird der Ultraschallsensor 14, insbesondere eine Aluminiummembran, mit Rechteckimpulsen zum Schwingen angeregt. Der Ultraschallsensor 14 sendet für eine bestimmte Zeit Ultraschallimpulse 19 aus, wobei während der Abklingdauer kein Empfang möglich ist. Der von dem Hindernis 18 reflektierte Schall versetzt die wieder beruhigte Membran des Ultraschallsensors 14 wiederum in Schwingungen. Diese Schwingungen werden durch den Ultraschallsensor 14 in ein elektrisches Signal umgewandelt und von der Sensorelektronik weiterverarbeitet. Die erfassten Messdaten werden schließlich dem ECU 16 bereitgestellt und zur Steuerung weiterer Komponenten des Fahrassistenzsystems 12, beispielsweise zur Ausgabe von Warnungen auf dem HMI, genutzt.

Während die Empfangscharakteristik des Sensors 14 in der Fahrsituation gemäß Figur 1 unterschiedliche Echos, angedeutet durch Bezugszeichen 20, am Hindernis 18 umfasst, zeigt Figur 2 eine Fahrsituation mit veränderten Umgebungsbedingungen. So kann in der Fahrsituation gemäß Figur 2 beispielsweise die Luftfeuchtigkeit erhöht sein oder der Sensor durch Verschmutzung weniger empfindlich sein. In diesem Fall wird der vom Ultraschallsensor 14 ausgesendete Ultraschallimpuls stärker in Luft absorbiert. Daraus ergibt sich, dass die Empfangscharakteristik des Ultraschallsensors 14 weniger Echoimpulse 20 des Hindernisses 18 umfasst. In dieser Situation stellt der Ultraschallsensor 14 somit Daten mit einer geringeren Güte bereit, was zu Unzuverlässigkeiten in der Reaktion des Fahrassistenzsystems 12 führen kann.

Um derartige Unzuverlässigkeiten des Fahrassistenzsystems 12 zu vermeiden, werden die Parameter des Ultraschallsensors 14 erfindungsgemäß so angepasst, dass Messdaten in einer optimalen Qualität vorliegen. Dazu werden die aktuellen Messdaten des Ultraschallsensors 14 mit erinnerungsbasierten Messdaten einer Umfeldkarte verglichen.

Die Umfeldkarte bildet dabei ein "Gedächtnis" des Ultraschallsensors 14, wobei in Bezug auf bereits erkannte Objekte 18 oder Merkmale im Umfeld des Fahrzeuges 10 Messdaten des Ultraschallsensors 14 in der Umfeldkarte hinterlegt sind. Befährt ein Fahrzeug 10 ein bereits bekanntes Umfeld, so kann beispielsweise anhand der Position des Fahrzeuges 10 bestimmt werden, um welche Objekte oder Merkmale es sich im aktuellen Umfeld des Fahrzeuges 10 handelt. Dazu enthält die Umfeldkarte neben den Messdaten bereits erkannter Objekte oder Merkmale auch Referenzdaten, die diese erinnerungsbasierten Messdaten beispielsweise mit Positionsdaten oder Messdaten anderer Sensoren verknüpfen. Eine einfache Möglichkeit stellt dabei die Verknüpfung mit GPS-Daten dar. So kann beispielsweise das ECU 16 aktuelle Messdaten des Ultraschallsensors 14 in Kombination mit Positionsdaten des GPS-Empfängers 22 in einer Umfeldkarte ablegen. Die Umfeldkarte stellt eine digitale Karte dar, die beispielsweise in einem Speicher des ECU 16 oder auf einem Server 22 hinterlegt sein kann. Der Zugriff auf den Server 22 erfolgt typischerweise über ein Datennetzwerk, wie das Internet.

Aus dem Vergleich der aktuellen Messdaten mit den erinnerungsbasierten Messdaten ergibt sich schließlich ein Wert, der die Messgüte des Ultraschallsensors 14 in Abhängigkeit von den Umgebungsbedingungen charakterisiert. Basierend auf diesem Vergleich berechnet das ECU 16 ein Steuersignal, das die Parameter des Sensors 14 an die Umgebungsbedingungen anpasst.

Im Falle des Ultraschallsensors 14 kann sowohl die Sendeleistung im Sendekanal als auch die Kennlinie im Empfangskanal justiert werden. So kann beispielsweise beim Vorliegen einer erhöhten Luftfeuchtigkeit die Sendeleistung des Ultraschallsensors 14 erhöht werden, um der erhöhten Signalabsorption entgegenzuwirken. Auch die Kennlinie kann adaptiert werden, indem die Schwellenwerte abgesenkt werden, und somit die Empfangsempfindlichkeit des Ultraschallsensors 14 erhöht wird.

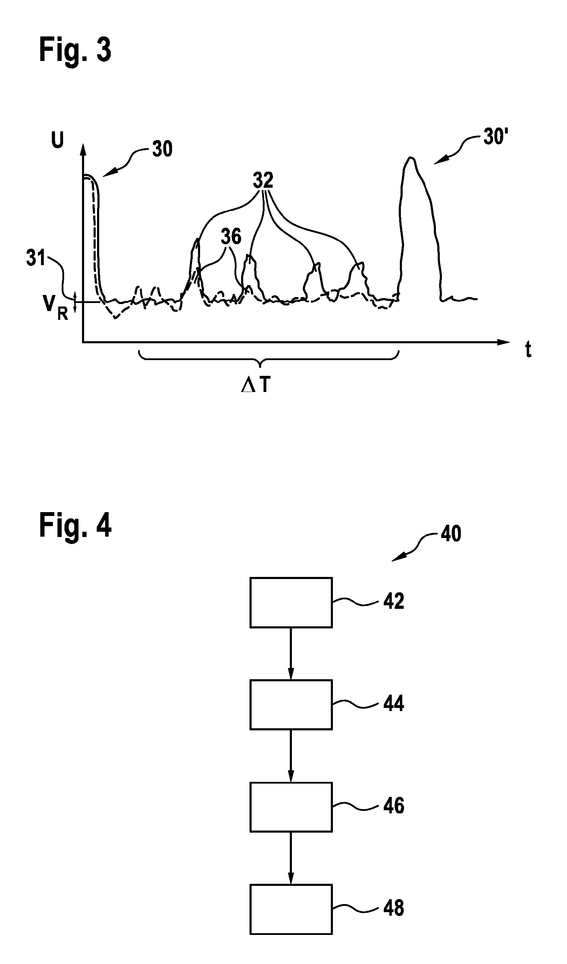

In Figur 3 ist ein kompletter erster Messzyklus ΔT zur Abstandsmessung mit einem Ultraschallsensor 14 gezeigt. Der Messzyklus ΔT beginnt mit einem Sendepuls 30 und reicht bis zu einem weiteren Sendepuls 30'. Innerhalb des Messzyklusses ΔT wird ein Zeitintervall definiert, in dem der Ultraschallsensor 14 empfangsbereit ist. Dabei sind in dem Diagramm der Figur 3 schematisch zwei Signalverläufe einer Spannung, U, in Volt gegen die Zeit, t, in Sekunden aufgetragen. Hier entspricht die durchgezogene Linie einem gemittelten Signalverlauf aus erinnerungsbasierten Messdaten und die gestrichelte Linie aktuellen Messdaten, die beispielsweise unter veränderten Umgebungsbedingungen der Figur 2 aufgenommen wurden. Innerhalb des Messzyklusses ist in beiden Signalverläufen ein Rauschen 31 um eine konstante Spannung, V_{R}, zu beobachten. Neben dem Rauschen sind auch einzelne Spitzen 32, 36 innerhalb des Messzyklusses ΔT erkennbar, die auf ein Echo zurückzuführen sind.

Die in dem Diagramm der Figur 3 dargestellte gestrichelte Linie deutet einen Messzyklus unter schlechteren Umgebungsbedingungen an. Dabei können sich die Umgebungsbedingungen, beispielsweise durch eine erhöhte Luftfeuchtigkeit oder eine erhöhte Lufttemperatur, auf die Messdaten des Ultraschallsensors 14 negativ auswirken. So sind die Echosignale 36 in ihrer Amplitude wesentlich geringer als die Echosignale 32 unter normalen Umgebungsbedingungen. Aus dem Vergleich dieser beiden Signale kann eine ECU 16 die Messgüte des Ultraschallsensors 14 und darüber hinaus ein Steuersignal zur Anpassung der Sensorparameter bestimmen.

In Figur 4 ist ein Flussdiagramm 40 dargestellt, das das Zusammenspiel der Komponenten des erfindungsgemäßen Fahrassistenzsystems 12 gemäß den Figuren 1 und 2 darstellt. In einem Schritt 42 wird eine Umfeldkarte mit erinnerungsbasierten Daten etwa des Ultraschallsensors 14 bereitgestellt. Dazu greift das ECU 16 auf eine digitale Karte mit gespeicherten Messdaten und Positionsdaten zu, wobei diese Daten in einem lokalen Speicher oder auf einem Server abgelegt sein können.

Weiterhin werden in einem Schritt 44 aktuelle Messdaten etwa des Ultraschallsensors 14 basierend auf dem aktuellen Umfeld des Fahrzeuges 10 erfasst. Diese Daten werden ebenfalls an das ECU 16 weitergeleitet und mit den erinnerungsbasierten Messdaten der Umfeldkarte abgeglichen. Durch Vergleich der aktuellen Messsignale mit dem in der Umfeldkarte gespeicherten Referenzwert lässt sich die aktuelle Sensorempfindlichkeit beurteilen und gegebenenfalls beeinflussen. Aus der Datenbankinformation lässt sich für ein bekanntes Objekt entscheiden, ob dieses permanent an diesem Ort vorhanden ist und damit klassifiziert, ob dieses Objekt an der aktuellen Messposition detektierbar sein soll.

In einem Schritt 46 wird ein Steuersignal generiert, das anhand des Vergleichs der aktuellen Messdaten mit erinnerungsbasierten Messdaten in Bezug auf das erkannte Objekt 18 im Umfeld des Fahrzeuges 10 bestimmt wird. Das generierte Steuersignal dient schließlich der Anpassung von Sensorparametern in Schritt 48. So kann insbesondere die Sendeleistung und/oder die Kennlinie des Ultraschallsensors 14 je nach Umgebungsbedingungen modifiziert werden.

Anhand der erinnerungsbasierten Messdaten des Ultraschallsensors 14 können die Parameter, welche die Messcharakteristik des Ultraschallsensors 14 bestimmen, in Abhängigkeit von den aktuellen Umgebungsbedingungen eingestellt werden. Dadurch kann die Messcharakteristik des Ultraschallsensors 14 unmittelbar angepasst werden. Auf diese Weise können qualitativ hochwertige Daten zur Verfügung gestellt werden, was die Genauigkeit und die Zuverlässigkeit der Messdaten des Ultraschallsensors 14 erhöht.

## Patentansprüche

1. Verfahren zum Betreiben eines Sensors (14) zur Umfelderkennung in einem Fahrassistenzsystem (12) eines Fahrzeuges (10), mit folgenden Schritten:
a. Bereitstellen einer Umfeldkarte (42) umfassend erinnerungsbasierte Messdaten;
b. Erfassen von aktuellen Messdaten (44) des Sensors (14) basierend auf dem aktuellen Umfeld;
c. Generieren eines Steuersignals (46) basierend auf den aktuellen Messdaten und den entsprechenden erinnerungsbasierten Messdaten;
d. Anpassen mindestens eines Parameters (48) des Sensors (14) basierend auf dem generierten Steuersignal.

2. Verfahren gemäß Anspruch 1, wobei der Sensor (14) zur Abstandsmessung in einem Fahrassistenzsystem (12) eingesetzt wird.

3. Verfahren gemäß einem der Ansprüche 1 oder 2, wobei die erinnerungsbasierten Messdaten erkannte Objekte oder Merkmale (18) im Fahrzeugumfeld kennzeichnen.

4. Verfahren gemäß einem der Ansprüche 1 bis 3, wobei die Umfeldkarte erinnerungsbasierte Messdaten mit Referenzdaten verknüpft.

5. Verfahren gemäß Anspruch 4, wobei die Referenzdaten die Position von erkannten Objekten oder Merkmalen (18) im Fahrzeugumfeld umfassen.

6. Verfahren gemäß einem der Ansprüche 1 bis 5, wobei die Umfeldkarte stetig aktualisiert wird und die gespeicherten Messdaten die Auswahl von erkannten Objekten steuert.

7. Verfahren gemäß einem der Ansprüche 1 bis 6, wobei aktuelle Messdaten mit erinnerungsbasierten Messdaten von anderen, in unterschiedlichen Positionen am Fahrzeug (10) verbauten Sensoren (22) verglichen werden.

8. Verfahren gemäß einem der Ansprüche 1 bis 7, wobei die Parameter des Sensors (14) mindestens einen Schwellenwert und/oder eine Sendeleistung des Sensors (14) betreffen.

9. Sensor (14) zur Umfelderkennung in einem Fahrassistenzsystem (12), der gemäß einem Verfahren nach einem der Ansprüche 1 bis 8 betrieben wird.

10. Computerprogramm zur Durchführung des Verfahrens nach einem der Ansprüche 1 bis 8, wenn das Computerprogramm auf einer programmierbaren Computereinrichtung ausgeführt wird.

11. Fahrassistenzsystem (12) umfassend einen Sensor (14) zur Umfelderkennung in einem Fahrzeug (10) mit folgenden Komponenten:
i. mindestens eine Komponente zum Bereitstellen einer Umfeldkarte (42) mit erinnerungsbasierten Messdaten;
ii. eine Komponente zum Bereitstellen von aktuellen Messdaten (44) des Sensors (14) basierend auf dem aktuellen Umfeld des Fahrzeuges (10);
iii. eine Komponente zum Generieren eines Steuersignals (46) basierend auf den aktuellen Messdaten und den entsprechenden erinnerungsbasierten Messdaten;
iv. eine Komponente zum Anpassen mindestens eines Parameters (48) des Sensors (14) basierend auf dem generierten Steuersignal.

## Claims

1. Method for operating a sensor (14) for recognizing the environment in a driving assistance system (12) of a vehicle (10), having the following steps:
a. providing a map (42) of the environment comprising recollection-based measurement data;
b. acquiring current measurement data (44) of the sensor (14) on the basis of the current environment;
c. generating a control signal (46) on the basis of the current measurement data and the corresponding recollection-based measurement data;
d. adapting at least one parameter (48) of the sensor (14) on the basis of the generated control signal.

2. Method according to Claim 1, the sensor (14) being used to measure the distance in a driving assistance system (12).

3. Method according to either of Claims 1 and 2, the recollection-based measurement data indicating recognized objects or features (18) in the vehicle environment.

4. Method according to one of Claims 1 to 3, the map of the environment linking recollection-based measurement data to reference data.

5. Method according to Claim 4, the reference data comprising the position of recognized objects or features (18) in the vehicle environment.

6. Method according to one of Claims 1 to 5, the map of the environment being continuously updated and the stored measurement data controlling the selection of recognized objects.

7. Method according to one of Claims 1 to 6, current measurement data being compared with recollection-based measurement data from other sensors (22) installed at different positions on the vehicle (10).

8. Method according to one of Claims 1 to 7, the parameters of the sensor (14) relating to at least one threshold value and/or a transmission power of the sensor (14).

9. Sensor (14) for recognizing the environment in a driving assistance system (12), which sensor is operated in accordance with a method according to one of Claims 1 to 8.

10. Computer program for carrying out the method according to one of Claims 1 to 8 when the computer program is executed on a programmable computer device.

11. Driving assistance system (12) comprising a sensor (14) for recognizing the environment in a vehicle (10), having the following components:
i. at least one component for providing a map (42) of the environment containing recollection-based measurement data;
ii. a component for providing current measurement data (44) of the sensor (14) on the basis of the current environment of the vehicle (10);
iii. a component for generating a control signal (46) on the basis of the current measurement data and the corresponding recollection-based measurement data;
iv. a component for adapting at least one parameter (48) of the sensor (14) on the basis of the generated control signal.

## Revendications

1. Procédé d'utilisation d'un capteur (14) de détection de l'environnement dans un système (12) d'assistance au conducteur d'un véhicule (10), le procédé présentant les étapes suivantes :
a. préparation d'une carte (42) de l'environnement qui comprend des données de mesure basées sur une mémoire,
b. saisie de données actuelles (44) du capteur (14) basées sur l'environnement actuel,
c. production d'un signal de commande (46) basé sur les données de mesure actuelles et les données correspondantes de mesure basées sur une mémoire et
d. adaptation d'au moins un paramètre (48) du capteur (14) sur la base du signal de commande qui a été produit.

2. Procédé selon la revendication 1, dans lequel le capteur (14) est utilisé pour mesurer des distances dans un système (12) d'assistance au conducteur.

3. Procédé selon l'une des revendications 1 ou 2, dans lequel les données de mesure basées sur une mémoire caractérisent des objets ou caractéristiques (18) détectés dans l'environnement du véhicule.

4. Procédé selon l'une des revendications 1 à 3, dans lequel la carte de l'environnement associe des données de mesure basées sur une mémoire à des données de référence.

5. Procédé selon la revendication 4, dans lequel les données de référence comprennent la position d'objets ou caractéristiques (18) détectés dans l'environnement du véhicule.

6. Procédé selon l'une des revendications 1 à 5, dans lequel la carte de l'environnement est mise à jour en permanence et les données de mesure conservées en mémoire commandent la sélection d'objets détectés.

7. Procédé selon l'une des revendications 1 à 6, dans lequel les données de mesures actuelles sont comparées à des données de mesure basées sur une mémoire d'autres capteurs (22) montés sur le véhicule (10) en différentes positions.

8. Procédé selon l'une des revendications 1 à 7, dans lequel les paramètres du capteur (14) concernent au moins une valeur de seuil et/ou une puissance d'émission du capteur (14).

9. Capteur (14) de détection de l'environnement dans un système (12) d'assistance au conducteur, utilisé par un procédé selon l'une des revendications 1 à 8.

10. Programme informatique permettant la mise en oeuvre d'un procédé selon l'une des revendications 1 à 8 lorsqu'il est exécuté sur un dispositif informatique programmable.

11. Système (12) d'assistance au conducteur, comprenant un capteur (14) de détection de l'environnement dans un véhicule (10), le système présentant les composants suivants :
i. au moins un composant qui prépare une carte (42) de l'environnement avec des données basées sur une mémoire,
ii. un composant qui prépare des données actuelles (44) du capteur (14) sur la base de l'environnement actuel du véhicule (10),
iii. un composant qui produit un signal de commande (46) sur la base des données de mesure actuelles et des données correspondantes de mesure basées sur une mémoire et
iv. un composant qui adapte au moins un paramètre (48) du capteur (14) sur la base du signal de commande qui a été produit.
